**Europäisches Patentamt**

**European Patent Office**

**Office européen des brevets**

(19)

(11) **EP 1 294 209 A1**

(12) **EUROPÄISCHE PATENTANMELDUNG**

(43) Veröffentlichungstag:
   **19.03.2003 Patentblatt 2003/12**

(51) Int Cl.⁷: **H04Q 7/38**

(21) Anmeldenummer: **01122149.6**

(22) Anmeldetag: **14.09.2001**

| (84) Benannte Vertragsstaaten:<br>**AT BE CH CY DE DK ES FI FR GB GR IE IT LI LU<br>MC NL PT SE TR**<br>Benannte Erstreckungsstaaten:<br>**AL LT LV MK RO SI**<br><br>(71) Anmelder: **SIEMENS AKTIENGESELLSCHAFT<br>80333 München (DE)** | (72) Erfinder:<br>• **Baier, Paul-Walter Prof.<br>  67661 Kaiserslautern (DE)**<br>• **Jötten, Christoph Arnold<br>  66687 Wadern (DE)**<br>• **Meurer, Michael<br>  67663 Kaiserslautern (DE)** |
| --- | --- |

(54) **Verfahren zum Ermitteln sendeortspezifischer Sendesignale unter Berücksichtigung quellenspezifischer Gütekriterien**

(57)    Die Erfindung bezieht sich auf ein Verfahren und eine Kommunikationssystem-Vorrichtung zum Ermitteln sendespezifischer Signale in einem Funk-Kommunikationssystem (GSM, UMTS) mit zumindest einer Sendestation (BS1, BS2) mit zumindest einer Sendeantenne (ka1-ka3) und mit zumindest einer Empfangsstation (Ms1 MS2) mit zumindest einer Empfangsantenne und einer Funkschnittstelle (V; V1, V2) zwischen diesen zum Übertragen von Signalen, wobei beim Ermitteln und Erzeugen des Sendesignals eine Vielzahl von einzelnen Teil-Sendesignalen für jeweils verschiedene Funkverbindungen (V1 bzw. V2) in einem gemeinsamen Verfahren berücksichtigt wird.

Um Empfangsstationen mit besonders kritischen Empfangsqualitätsanforderungen besonders bevorzugt berücksichtigen zu können, wird vorgeschlagen, Teil-Sendesignale für verschiedene bestimmte Funkverbindungen (V1 bzw. V2) beim Erzeugen des Sendesignals einer verschiedenen spezifischen Wichtung zu unterziehen.

Fig. 1

------: hohe Rate V1, V2
- - - -: niedrige Rate
········: Störsignal N

EP 1 294 209 A1

## Beschreibung

Die Erfindung bezieht sich auf ein Verfahren zum Ermitteln sendeortspezifischer Sendesignale in einem Funk-Kommunikationssystem mit den oberbegrifflichen Merkmalen des Patentanspruchs 1 sowie Kommunikationssystemvorrichtungen zum Durchführen eines solchen Verfahrens.

Bei Funk-Kommunikationssystemen, beispielsweise gemäß dem Standard GSM (Global System for Mobile Communications) oder UMTS (Universal Mobile Telecommunications System), werden Daten und Informationen zwischen netzseitigen und teilnehmerseitigen Stationen über entsprechende Funkschnittstellen ausgetauscht. In Abwärtsrichtung (Downlink), das heißt von netzseitigen Stationen zu teilnehmerseitigen Stationen, wird ein Sendesignal erzeugt, das über eine oder mehrere Sendestationen, denen jeweils eine oder mehrere Antennen zugeordnet sein können, ausgesandt. Dazu wird das Sendesignal derart geformt, dass die Daten für einzelne teilnehmerseitige Stationen von diesen möglichst gut detektiert werden können.

Nachteilhaft in Mehrteilnehmersystemen oder in parallel arbeitenden Funksystemen ist, dass Interferenz auftritt. Bei hochdatenratigen Kommunikationsverbindungen sind die Empfänger bezüglich Interferenz besonders empfindlich. Interferenz kann durch Signalanteile für andere teilnehmerseitige Stationen aber auch durch Signalquellen, die von dem Funk-Kommunikationssystem unabhängig sind, entstehen.

Die Aufgabe der Erfindung besteht darin, ein Verfahren zum Ermitteln sendeortspezifischer Signale in einem Funk-Kommunikationssystem derart zu entwickeln, dass auch teilnehmerseitige Stationen, die gegen Interferenz oder sonstige Störungen empfindlich sind, ein geeignetes Empfangssignal erhalten.

Diese Aufgabe wird durch ein Verfahren zum Ermitteln sendeortspezifischer Signale mit den Merkmalen des Patentanspruchs 1 bzw. eine Kommunikationssystemvorrichtung zum Durchführen eines solchen Verfahrens mit den Merkmalen des Patentanspruchs 8 gelöst.

Vorteilhafte Ausgestaltungen sind Gegenstand von abhängigen Ansprüchen.

Bei einem Verfahren zum Ermitteln sendeortspezifischer Sendesignale in einem Funk-Kommunikationssystem mit zumindest einer Sendestation mit zumindest einer Sendeantenne und mit zumindest einer Empfangsstation mit zumindest einer Empfangsantenne und einer Funkschnittstelle zwischen diesen zum Übertragen eines Sendesignals, wobei beim Ermitteln und Erzeugen der sendeortspezifischen Sendesignale eine Vielzahl von einzelnen Teil-Sendesignalen für jeweils verschiedene Funkverbindungen in einem gemeinsamen Verfahren berücksichtigt wird, ist es vorteilhaft, Teil-Sendesignale für verschiedene bestimmte Funkverbindungen beim Erzeugen des Sendesignals einer verschiedenen spezifischen Wichtung zu unterziehen. Dadurch können ausgewählte Empfangsstationen z.B. eine besonders energiereiche Sendesignalkomponente erhalten und gegenüber anderen Empfangsstationen im Sendebereich bevorzugt werden.

Bei dem Verfahren zum sendeortspezifischen Einstellen von Sendegewichten zum Übertragen teilnehmerspezifischer Signale sind die totalen sendeortspezifischen Sendesignale vorzugsweise Summen teilnehmer- und sendeortspezifischer Signale.

Die teilnehmer- und sendeortspezifischen Signale werden durch komplexes Gewichten teilnehmerspezifischer Sendesignale mit teilnehmer- und sendeortspezifischen Gewichten bzw. komplexwertigen Faktoren erzeugt.

Sendeorte können hierbei durch ein einzeln ansteuerbares Antennenelement einer Gruppenantenne, eine Einzelantenne oder aber durch gemeinsam angesteuerte Gruppenantennen repräsentiert werden.

Bei dem Verfahren werden im wesentlichen die teilnehmer- und sendeortspezifischen Gewichte ermittelt und eingestellt. Die jeweiligen teilnehmer- und sendeortspezifischen Gewichte für einen Teilnehmer bzw. eine sendeseitige Quelle werden so eingestellt, dass die Interferenz, die durch das für diesen Teilnehmer bestimmte teilnehmerspezifische Signal bei zumindest einem der anderen Teilnehmer verursacht wird, reduziert wird. Die bei den einzelnen anderen Teilnehmern zu reduzierende Interferenz wird entsprechend ihrer jeweiligen teilnehmerspezifischen Interferenz-Empfindlichkeit gewichtet berücksichtigt.

Zwischen den Faktoren $b_k$, welche die teilnehmerspezifischen Wichtungen beim Ermitteln der teilnehmer- und sendeortspezifischen Sendegewichte darstellen und den teilnehmer- und sendeortspezifischen Sendegewichten $w_{k,ka}$ selbst ist dabei zu unterscheiden, wie dies aus der nachfolgenden technischen Beschreibung hervorgeht.

Erreicht wird durch das Einstellen geeigneter sendeortspezifischer Gewichte eines Teilnehmers das Verhältnis von übertragener Nutzenergie zu einer gewichteten Summe der bei den anderen Empfängern durch dieses Signal verursachten Interferenzenergien zu maximieren.

In das quellenspezifische Gütekriterium die mit den komplexwertigen Faktoren koppelbare zu erwartende Energie der an den Empfangsorten erwünschten und/oder nicht erwünschten Teilsignale der empfangsortspezifischen Empfangssignale eingehen zu lassen ist dadurch bedingt, dass die zu erwartenden Energien u.a. von wirksamen langsam veränderlichen Kanalcharakteristika und/oder den wirksamen Pfadgewinnen der zwischen den Sendeorten und Empfangsorten bestehenden Verbindungen abhängen.

Aus einer empfänger-orientierten Sicht ist das quellenspezifische Gütekriterium eine Funktion von einem oder mehreren Quotienten aus der Energie der an einem Empfangsort empfangenen gewünschten Signale und einer Funktion der Energie der am gleichen Empfangsort empfangenen unerwünschten Signale. Diese empfänger-orientierte Sicht ist in optimaler Form zweckmäßigerweise iterativ umsetzbar.

In das quellenspezifische Gütekriterium Informationen über empfangsortspezifisch empfangene Signale eingehen zu lassen, die von nicht zu der für die Sendesignalerzeugung gehörenden Anordnung von Sende- und Empfangsantennen des Kommunikationssystems gehörenden Signalquellen herrühren, wird insbesondere durch die Verwendung bzw. Berücksichtigung von Kovarianzmatrizen, Energien, Leistungen, u.ä. ermöglicht.

Bei einer senderorientierten Betrachtung ist es vorteilhaft, wenn das quellenspezifische Gütekriterium der Quotient aus der Energie der an einem Empfangsort empfangenen gewünschten Signale und einer Linearkombination, also eine mit reellen Faktoren gewichteten Summe, der durch das Übertragen des Sendesignals an anderen Empfangsorten verursachten Interferenzenergien ist.

Ein Ausführungsbeispiel wird nachfolgend anhand der Zeichnung näher erläutert. Es zeigen:

Fig. 1 schematisch die Situation in einem Funk-Kommunikationssystem mit mehreren netzseitigen und mehreren teilnehmerseitigen Stationen und

Fig. 2 eine Skizze zum Verdeutlichen der Vorgehensweise beim Erzeugen antennenspezifischer Sendesignale für ein solches Funk-Kommunikationssystem.

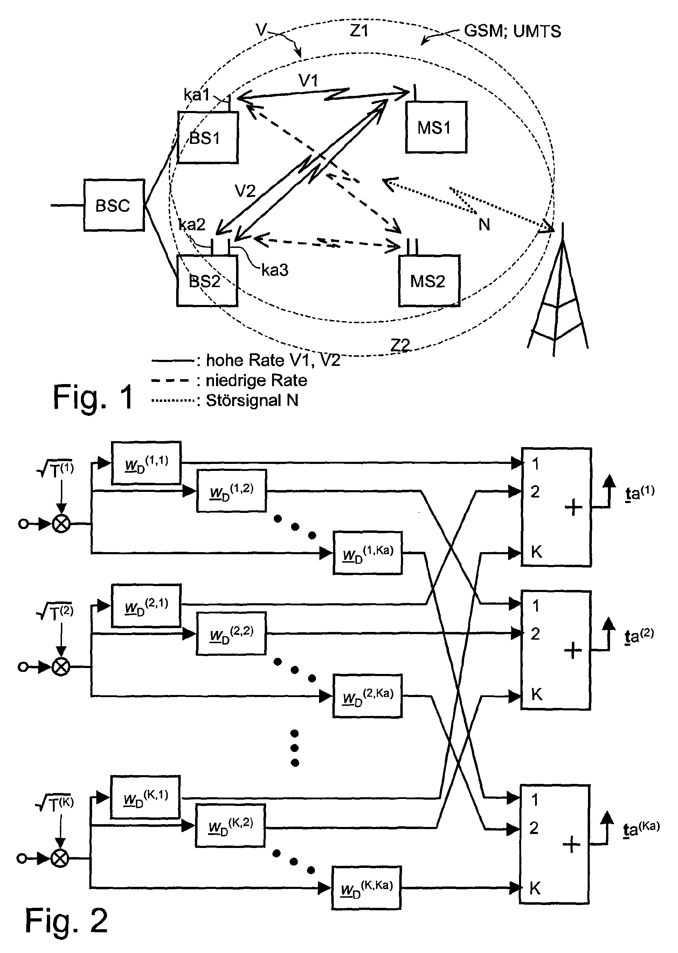

Wie aus Fig. 1 ersichtlich, weist ein beispielhaftes Funk-Kommunikationssystem eine Vielzahl von Einrichtungen auf, von denen hier zur Vereinfachung nur einzelne dargestellt sind. Senderseitig sind dies eine Basisstations-Steuereinrichtung BSC, an die zur Kommunikation mit teilnehmerseitigen Stationen eine Vielzahl von Basisstationen BS1, BS2 angeschlossen ist und die netzseitig mit einer Vielzahl weiterer Stationen und Einrichtungen verbunden ist. Den Basisstationen BS1, BS2 sind Antennen ka1, ka2, ka3 zugeordnet, über die Funkzellen Z1, Z2 der beiden Basisstationen BS1 bzw. BS2 versorgt werden. Innerhalb der Funkzellen Z1, Z2 kann über die Antennen ka1 bzw. ka2, ka3 eine Funkschnittstelle V zu einer oder mehreren teilnehmerseitigen Stationen MS1 bzw. MS2 aufgebaut werden. Beim vorliegenden Ausführungsbeispiel weist die Funkschnittstelle V einzelne direkte Funkverbindungen V1 zwischen dem Antennenelement ka1 der ersten Basisstation BS1 und der ersten teilnehmerseitigen Station MS1 sowie direkte Funkverbindungen V2 zwischen den Antennen ka2 und ka3 der zweiten Basisstation BS2 und dieser ersten teilnehmerseitigen Station MS1 auf. Entsprechende Verbindungen werden auch zwischen den einzelnen Antennen ka1 - ka3 und weiteren teilnehmerseitigen Stationen, wie hier der teilnehmerseitigen Station MS2 aufgebaut. Natürlich können beliebige andere Anordnungen von Stationen und Antennen gewählt werden, insbesondere auch einzelne netzseitige Stationen mit einer Vielzahl von Antennen, um eine Signalerzeugung in einer zentralen übergeordneten Einrichtung, wie hier zum Beispiel in der Basisstations-Steuereinrichtung BSC vermeiden zu können.

Zwar handelt es sich um direkte Funkverbindungen V1, V2, deren Signale werden aber in der Regel trotz Strahlformung auch bei anderen teilnehmerseitigen Stationen empfangen. Störeinflüsse hinsichtlich der Empfangssignale bei den teilnehmerseitigen Stationen MS1, MS2 ergeben sich entsprechend auch durch Sendesignalanteile für eine andere teilnehmerseitige Station. Beim dargestellten Ausführungsbeispiel würde beispielsweise die teilnehmerseitige Station MS2 nicht nur direkt für sie bestimmte Sendesignalanteile empfangen, sondern auch interferierende Sendesignalanteile für die andere teilnehmerseitige Station MS1, die beispielsweise Signalanteile der direkten Funkverbindung zwischen der Antenne ka1 der ersten Basisstation BS1 und der ersten teilnehmerseitigen Station MS1 über die direkte Funkverbindung V1 teilweise mit empfängt. Weitere interferierende Signale oder Energieeinstrahlungen können auch von externen Signalquellen als allgemeines Störsignal bzw. Noise N stören.

Während bei den derzeit üblichen Signalformungskonzepten eine Gleichbehandlung der verschiedenen teilnehmerseitigen Stationen MS1, MS2 vorgenommen wird, soll nachfolgend ein Verfahren zum Strahlformen beschrieben werden, bei dem individuelle Bedürfnisse einzelner der teilnehmerseitigen Stationen MS1, MS2 berücksichtigt werden, wobei Störeinflüsse für diese besonders berücksichtigt werden. Insbesondere berücksichtigt das Verfahren zum Strahlformen in der Abwärtsverbindung auch verschiedene parallel auftretende Dienste- bzw. Serviceklassen eines WCDMA- (Wideband Code Division Multiple Access) Mobilfunksystems im HSDPA- (High Speed Data Packet Access) Betrieb.

Beim Erzeugen eines Sendesignals werden nachfolgend für die einzelnen insbesondere senderseitigen Antennen ka1-ka3 Antennengewichte berücksichtigt, die als bevorzugtes Kriterium das Verhältnis der zu gewünschten teilnehmerseitigen Station MS1, MS2 bzw. zum Nutzteilnehmer übertragenen Energie relativ zur insgesamt an das restliche System abgegebenen Energie bzw. dadurch gebildeter Interferenz extremierbar, insbesondere maximierbar ist. In einer einfachsten Ausgestaltung werden dabei unterschiedliche Dienstqualitätsklassen der einzelnen zu versorgenden teilnehmerseitigen Stationen MS1, MS2 nicht berücksichtigt, eine solche Berücksichtigung kann jedoch durch Aufnahme entsprechender Faktoren in die Berechnungen eingeführt werden. Bei beispielsweise HSDPA richten sich die Signal-Stör-Verhältnis-Anforderungen der einzelnen teilnehmerseitigen Stationen bzw. empfängerseitigen nach dem individuellen Modulationsgrad, der Modulationsart, dem CDMA-Spreizfaktor und der Coderate des Kanalcodierers mit der die jeweilige empfängerseitige Station versorgt wird. Die teilnehmerseitigen Stationen MS1, MS2 sind infolge dessen unterschiedlich empfindlich gegenüber Interferenz. Bei der Signalerzeugung für einen zu versorgenden Raum ist es daher vorteilhaft, einerseits Interferenz zu empfindlicheren empfängerseitigen Stationen besonders stark zu berücksichtigen, andererseits gegenüber Störsignalen weniger empfindliche empfänger- bzw. teilnehmerseitige Stationen MS1, MS2 beim Strahlformen ganz oder weitgehend zu vernachlässigen. Teilnehmerseitige Stationen MS1, MS2 nicht zu berücksichtigen entspricht einer Erhöhung der Freiheitsgrade und gibt somit die Möglichkeit, die gewonnenen Freiheitsgrade zu Gunsten anderer teilnehmerseitiger Stationen gewinnbringend einzusetzen.

Nachfolgend wird insbesondere berücksichtigt, dass die Störresistenz der teilnehmerseitigen bzw. empfängerseitigen Stationen MSk, k=1...K mit wachsendem Spreizfaktor $Q^{(k)}$ des spezifischen CDMA-Codes zunimmt. Ferner wird berücksichtigt, dass die Störanfälligkeit der teilnehmerseitigen Stationen MSk bzw. $MS^{(k)}$ mit k=1...K mit der Mächtigkeit $M^{(k)}$ des für die teilnehmerseitige Station MSk, k=1...K verwendeten Symbolalphabets zunimmt. Außerdem wird vorteilhafterweise berücksichtigt, dass die teilnehmerseitigen Stationen MSk, k=1...K mit wachsender Coderate $R_C^{(k)}$ gegen Interferenz und Rauschen empfindlicher werden. Zweckmäßigerweise wird auch berücksichtigt, dass beim Verwenden höherwertiger Modulationsalphabete $M^{(k)}$ ein größeres Verhältnis zwischen Bitenergie und Störleistungsdichte $(E_b/N_0)^{(k)}$ bei den teilnehmerseitigen Stationen MSk, k=1...K notwendig ist, um eine gleichbleibende Bitfehlerrate zu erzielen.

Weitere Faktoren sind berücksichtbar, werden nachfolgend jedoch nicht speziell berücksichtigt, um das beispielhafte Verfahren übersichtlich zu halten. Während vorstehend und nachfolgend zwischen senderseitigen und teilnehmerseitigen Stationen unterschieden wird, soll keine feste Vorgabe mit Blick auf Aufwärts- bzw. Abwärtsrichtungen in Funkkommunikationssystemen festgelegt werden. Ein Einsatz in umgekehrter Richtung ist ebenfalls möglich.

Die vorstehend aufgeführten Größen und Faktoren werden bei dem nachfolgend beschrieben Verfahren bzw. bei der räumlichen Vorverarbeitung zum Erzeugen eines Sendesignals explizit berücksichtigt, um einen beispielhaften HSDPA-spezifischen Mischbetrieb zu unterstützen. Dabei wird in einem ersten Abschnitt eine Vorgehensweise zum sende- bzw. basisstationsseitigen räumlichen Vorverarbeiten in der Abwärtsstrecke, also für die Abwärts-Funkverbindungen (V1, V2), vorgestellt, die das Pseudo-Träger-zu-Interferenz-Verhältnis maximiert. In dem darauf folgenden Abschnitt wird eine bevorzugte, insbesondere auf den HSDPA-spezifischen Mischbetrieb angepasste Variante des zuvor veranschaulichten Verfahrens beschrieben.

Bei der nachfolgenden Beschreibung stellen fett gedruckte kleine und große Buchstaben Vektoren bzw. Matrizen dar, unterstrichene Buchstaben stellen komplexe Größen dar.

Unter Bezug auch auf Fig. 2 wird die Erzeugung eines Sendesignals aus einer Vielzahl quellenspezifischer Daten bzw. Signale $\underline{t}^{(k)}$, k=1...K, beschrieben, wobei diese Signale $\underline{t}^{(k)}$ direkt den einzelnen teilnehmerseitigen Stationen MSk, k=1...K, zugeordnet sind und wobei beim vorliegenden Beispiel davon ausgegangen wird, dass alle CDMA-Sequenzen die gleiche Chipdauer $T_c$ haben sollen. Die quellenspezifischen CDMA-Signale gehen dabei aus jeweils signalspezifischer Kanalkodierung, Modulation und Bandspreizung mit teilnehmerspezifischer Coderate $R_C^{(k)}$, Modulationsgrad $M^{(k)}$ bzw. Spreizfaktor $Q^{(k)}$, k=1...K, hervor. Wie aus Fig. 1 ersichtlich, gehen in ein Verfahren zum Erzeugen eines Sendesignals diese den einzelnen Mobilstationen MSk zugeordneten Signale $\underline{t}^{(k)}$ ein, während nach Durchführung des Verfahrens antennenspezifische Sendesignale $\underline{t}_a^{(ka)}$, ka=1...$K_a$ durch komplexes Gewichten und Addieren quellenspezifisch gespreizter Sequenzen bzw. Signale $\underline{t}^{(k)}$, k=1...K, hervorgehen.

Bei dem nachfolgend beschriebenen Verfahren werden seitens der senderseitigen Station bzw. Stationen BS1, BS2, BSC vorliegende, in der Abwärtsverbindung gültige räumliche Kovarianzmatrizen $\underline{R}_s(k)$, k=1...K, vorausgesetzt. Diese können bei TDD-Systemen (TDD: Time Division Duplex) beispielsweise aufgrund antennenspezifischer Kanalimpulsantworten der Aufwärtsverbindung (Up Link), bei FDD-Systemen (FDD: Frequency Division Duplex) aufgrund von beispielsweise Richtungs- und Energieschätzungen aus antennenspezifischen Kanalimpulsantworten der Aufwärtsverbindung, durch eine Transformation räumlicher Kovarianzmatrizen der Aufwärtsverbindung in solche der Abwärtsverbindung (Down Link) und/oder aufgrund in der Aufwärtsverbindung rücksignalisierter Information ermittelt werden. Wenn in der Abwärtsverbindung zwischen den teilnehmerseitigen Stationen MS1, MS2 bzw. MSk, k=1...K, und den netzseitigen bzw. senderseitigen Antennenelementen $k_a$, $k_a$=1...$K_a$, die Kanalimpulsantworten $\underline{h}^{(k,ka)}$, k=1...K, ka=1...Ka, gelten, ergeben sich die Elemente der teilnehmerspezifischen räumlichen (Ka $\times$ Ka)-Kovarianzmatrizen $\underline{R}_S^{(k)}$, k=1...K, zu

$$\left[\underline{\mathbf{R}}_s^{(k)}\right]_{i,j} = E\left\{\underline{h}^{(k,i)T}\underline{h}^{(k,j)*}\right\}, \quad k = 1\ldots K, i, j = 1\ldots K_a. \tag{1}$$

Die quellenspezifischen CDMA-Signale werden mit den reellen Faktoren, $\sqrt{T^{(k)}}$, k=1...K, gewichtet. Die quellen- und antennenspezifischen Sendesignalanteile werden mit komplexen teilnehmer- und antennenspezifischen Faktoren $\underline{w}_D^{(k,ka)}$, ka=1...K, ka=1...Ka gewichtet und werden zu den quellenspezifischen Antennen-Gewichtsvektoren

$$\underline{\mathbf{w}}_D^{(k)} = \left(\underline{w}_D^{(k,1)} \ldots \underline{w}_D^{(k,K_a)}\right), \quad k = 1 \ldots K. \tag{2}$$

zusammengefasst. Alle Sendegewichtsvektoren $\underline{w}_D^{(k)}$, k=1...K, werden so eingestellt, dass

$$\left\|\underline{w}_D^{(k)}\right\|^2 = 1, \qquad k = 1\ldots K, \tag{3}$$

gilt. Die zu den teilnehmerseitigen Stationen MSk, k=1...K, übertragenen Nutzenergien ergeben sich zu

$$C^{(k)} = T^{(k)} \underline{w}_D^{(k)*T} \underline{R}_s^{(k)} \underline{w}_D^{(k')}, \qquad k = 1\ldots K, \tag{4}$$

wobei der Interferenzanteil bei einer teilnehmerseitigen bzw. empfängerseitigen Station MSk, k=1...K, der auf Sendesignalanteile zurückgeht, die für eine Mobilstation MSk', k'<>k, gesendet werden, durch

$$I^{(k,k')} = T^{(k')} \underline{w}_D^{(k')*T} \underline{R}_s^{(k)} \underline{w}_D^{(k')}, \qquad k, k'= 1\ldots K, \ k' \neq k, \tag{5}$$

beschrieben wird. Die bei den teilnehmerseitigen Stationen MSk, k=1...K, jeweils insgesamt auftretenden Interferenzen $I^{(k)}$, k=1...K, ergeben sich mit den Interferenzbeiträgen gemäß vorstehender Formel (5) zu

$$I^{(k)} = \sum_{\substack{k'=1 \\ k' \neq k}}^{K} I^{(k,k')}, \quad k=1\ldots K. \tag{6}$$

Die an den Empfängereingängen der teilnehmerseitigen Stationen MSk, k=1...K, herrschenden Träger-zu-Interferenz-Verhältnisse $(C/I)^{(k)}$, k=1...K, werden mit den diesbezüglichen vorstehenden Formeln (4,6) beschrieben durch

$$\left(\frac{C}{I}\right)^{(k)} = \frac{C^{(k)}}{I^{(k)}}$$

$$= \frac{C(k)}{\sum\limits_{\substack{k'=1 \\ k' \neq k}}^{K} I^{(k,k')}}$$

$$= \frac{T^{(k)} \underline{\mathbf{w}}_D^{(k)*T} \underline{\mathbf{R}}_s^{(k)} \underline{\mathbf{w}}_D^{(k)}}{\sum\limits_{\substack{k'=1 \\ k' \neq 1}}^{K} (T^{(k')} \underline{\mathbf{w}}_D^{(k')*T} \underline{\mathbf{R}}_s^{(k)} \underline{\mathbf{w}}_D^{(k')})}, \quad k = 1\ldots K. \tag{7}$$

Das Verhältnis von zur gewünschten teilnehmerseitigen Station MSk übertragenen Nutzenergie $C^{(k)}$ und der Summe aller durch dieses Signal bei den anderen teilnehmerseitigen Stationen MSk', k' <>k, verursachten Interferenzbeiträgen $I^{(k,k')}$, k'<>k,

$$\left(\frac{C}{I}\right)_T^{(k)} = \frac{C^{(k)}}{\sum_{\substack{k'=1 \\ k'\neq 1}}^{K} I^{(k',k)}} , \quad k = 1 \ldots K. \quad (8)$$

wird als Pseudo-Träger-zu-Interferenz-Verhältnis $(C/I)_T^{(k)}$ bezeichnet. Mit den vorstehenden Formeln (4 und 6) wird das Pseudo-Träger-zu-Interferenz-Verhältnis $(C/I)_T^{(k)}$ der letztgenannten Formel (8) zu

$$\left(\frac{C}{I}\right)_T^{(k)} = \frac{T^{(k)}\underline{\mathbf{w}}_D^{(k)*T}\mathbf{R}_s^{(k)}\underline{\mathbf{w}}_D^{(k)}}{T^{(k)}\underline{\mathbf{w}}_D^{(k)*T}\sum_{\substack{k'=1 \\ k'\neq k}}^{K}\mathbf{R}_s^{(k')}\underline{\mathbf{w}}_D^{(k)}} , \quad k = 1 \ldots K. \quad (9)$$

Die Gewichtsvektoren $\underline{\mathbf{w}}^{(k)}$, k=1...K, gemäß Formel (2) werden nun so gewählt, dass das Pseudo-Träger-zu-Interferenz-Verhältnis $(C/I)_T^{(k)}$ gemäß Formel (8) maximiert wird, um insgesamt möglichst wenig Interferenz bei jeweils anderen Mobilstationen zu verursachen.

Nachfolgend wird im folgenden Abschnitt eine Erweiterung der vorstehend beschriebenen Verfahrensweise auf einen Mischbetrieb mit verschiedenen teilnehmerseitigen bzw. empfängerseitigen Stationen MSk, k=1...K, beschrieben. Bei diesem Mischbetrieb soll die Strahlformung in der Abwärtsstrecke entsprechend den Anforderungen der einzelnen empfängerseitigen Stationen MSk an die für diese bzw. deren angeforderte Dienste erforderlichen Datenraten angepasst werden.

In interferenzbegrenzten Systemen, bei denen die an den teilnehmerseitigen Stationen MSk, k=1...K, wirksamen Störungen nur auf eine Gleichkanal-Interferenz zurückgehen, ergeben sich die Bit-bezogenen Signal-Stör-Verhältnisse $(E_b/N_0)^{(k)}$ bei gegebenen Träger-zu-Interferenz-Verhältnissen $(C/I)^{(k)}$, k=1...K, zu

$$\left(E_b / N_0\right)^{(k)} = \left(\frac{C}{I}\right)^{(k)} \frac{Q^{(k)}T_c B}{R_c^{(k)} \log_2\left(M^{(k)}\right)} , \quad k = 1 \ldots K. \quad (10)$$

Dieses Bit-bezogene Signal-Stör-Verhältnis $(E_b/N_0)^{(k)}$ für die einzelnen teilnehmerseitigen Stationen MSk, k=1...K, ergibt sich somit aus Produkt des Träger-zu-Interferenz-Verhältnisses $(C/I)^{(k)}$ für die einzelnen teilnehmerseitigen Stationen MSk mit dem jeweiligen Spreizfaktor $Q^{(k)}$ des gewählten CDMA-System, der Chipdauer $T_C$ und der Bandbreite B, dieses Produkt dividiert durch das Produkt aus der Coderate $R_C(k)$ des Kanalcodierers und dem Logarithmus der Mächtigkeit des Modulationsalphabetes $M^{(k)}$. Bei diesem Ansatz wird somit die Bitenergie pro Störleistungsdichte betrachtet, wobei Einflüsse durch die Modulation und so weiter heraus gerechnet sind.

Dieses Bitenergie-bezogene Signal-Stör-Verhältnis ist lediglich ein Beispiel für einen derartigen Verfahrensansatz. Durch entsprechende Umstellungen oder Ergänzungen sind auch weitere Einflüsse in das Verfahren einbeziehbar.

Ausgehend von der letztgenannten Formel ergeben sich die quellenspezifischen reellen Faktoren $b_k$, k=1...K, zu

$$b_k = \frac{R_c^{(k)} \log_2\left(M^{(k)}\right)}{Q^{(k)}T_c B} , \quad k = 1 \ldots K. \quad (11)$$

Die bitbezogenen Signal-Stör-Verhältnisse $(E_b/N_0)^{(k)}$ können durch $b_k$ nach (11) in der Form

$$\left(E_b / N_0\right)^{(k)} = \frac{C^{(k)}}{I^{(k)}b_k} \, , \tag{12}$$

geschrieben werden. Dabei soll letztendlich ein empfängerseitiges Träger-zu-Interferenz-Verhältnis $(C/I)^{(k)}$ auf die Senderseite übertragen werden, um dort bei der Formung des Sendesignals berücksichtigt zu werden.

Wird eine modifizierte Interferenz $I_{mod}^{(k,k')}$ eingeführt, bei der die Interferenz $I^{(k',k)}$, die auf ein für eine empfängerseitige Station MSk, k=1...K, gesendetes Signal zurückgeht und bei einer anderen teilnehmerseitigen bzw. empfängerseitigen Station MSk', k' =1...K, k'<>k, verursacht wird, mit dem für die zweite teilnehmerseitige Station MSk' gültigen Faktor $b_{k'}$ nach der vorletzten Formel (11) gewichtet wird, so folgt

$$I_{mod}^{k',k} = I^{(k',k)}b_{k'}, \qquad k',k = 1...K, \qquad k' \neq k. \tag{13}$$

Mit derart definierten Interferenzen $I_{mod}^{(k,k')}$ kann das bitbezogenen Signal-Stör-Verhältnis bei der ersten teilnehmerseitigen Station MSk, k=1...K, unter Berücksichtigung der vorstehend aufgeführten Formeln als

$$\left(E_b / N_0\right)^{(k)} = \frac{C^{(k)}}{\sum_{\substack{k'=1 \\ k' \neq k}}^{K} I_{mod}^{(k,k')}} \, , \quad k = 1...K, \tag{14}$$

beschrieben werden. Weiterhin kann unter Berücksichtigung der vorstehenden Definition (13) ein modifiziertes Pseudo-Signal-Störverhältnis $\gamma_{T,mod}^{(k)}$

$$\gamma_{T,\mathrm{mod}}^{(k)} = \frac{C^{(k)}}{\sum_{\substack{k'=1 \\ k' \neq k}}^{K} I_{\mathrm{mod}}^{(k',k)}}, k = 1...K, \tag{15}$$

formuliert werden, welches auf das bitbezogene Signal-Stör-Verhältnis $E_b/N_0$ bei den teilnehmerseitigen Stationen bezogen ist. Das Pseudo-Signal-Stör-Verhältnis (15) wird mit den vorstehend beschriebenen Formeln (4, 6 und 13) zu

$$\gamma_{T,\mathrm{mod}}^{(k)} = \frac{\underline{\mathbf{w}}_D^{(k)*T} \underline{\mathbf{R}}_s^{(k)} \underline{\mathbf{w}}_D^{(k)}}{\underline{\mathbf{w}}_D^{(k)*T} \left( \sum_{\substack{k'=1 \\ k' \neq k}}^{K} \underline{\mathbf{R}}_s^{(k')} b_{k'} \right) \underline{\mathbf{w}}_D^{(k)}} \, , \quad k = 1...K. \tag{16}$$

Ziel der nachfolgenden Verarbeitung ist die Extremierung, insbesondere Maximierung dieses Pseudo-Signal-Stör-Verhältnisses $\gamma_{Tmod}^{(k)}$ für einzelne oder alle der kritischen teilnehmerseitigen bzw. empfängerseitigen Stationen MSk, k=1...K. Als kritische Stationen MSk sind insbesondere solche anzusehen, die Dienste mit einer hohen Bit-Rate, zum Beispiel gemäß HSDPA als paketorientierte Dienste in insbesondere der Abwärtsverbindung beanspruchen. Bei der vorstehend beschriebenen Formel entspricht der Faktor $b_{k'}$ somit einem Empfängerstations-spezifischen Wichtungsfaktor.

Ziel der räumlichen Vorverarbeitung ist nun somit, das Verhältnis (16) durch eine geeignete Wahl eines Gewichtsvektors $\underline{w}_D^{(k)}$ zu maximieren. In Formel (15) wird die beim Versorgen von einer Station MSk bei anderen Stationen MSk', k'<>k, verursachte Interferenz mit dem jeweils bei dieser Station MSk' geltenden Gewichtsfaktor bk' gewichtet. Je größer dieser Gewichtsfaktor bk' ist, desto störempfindlicher ist das von der anderen teilnehmerseitigen Station MSk' zu detektierende Signal und desto stärker geht die bei dieser anderen teilnehmerseitigen Station MSk' verursachte Interferenz in die Nenner der zu optimierenden Pseudo-Signal-Stör-Verhältnisse $\gamma_{Tmod}^{(k)}$, k=1...K, nach Formel (15) mit ein. Beim vorliegenden Ausführungsbeispiel stellt die letztaufgeführte Formel (16) den Rayleigh-Quotienten des allgemeinen Eigenwertproblems

$$\underline{\mathbf{R}}_s^{(k)}\underline{\mathbf{w}}_D^{(k)} \;=\; \gamma_{T,\mathrm{mod}}^{(k)}\left(\sum_{\substack{k'=1 \\ k'\neq k}}^{K} \underline{\mathbf{R}}_s^{(k')} b_{k'}\right)\underline{\mathbf{w}}_D^{(k)}, \quad k \;=\; 1\ldots K. \tag{17}$$

mit hermiteschen Matrizen dar. Es handelt sich somit um ein in üblicher Art und Weise zu lösendes Eigenwertproblem. Der größte reell positive Eigenwert $\gamma_{Tmod,max}^{(k)}$ zum allgemeinen Eigenwertproblem (17) ist das bestmögliche Pseudo-Signal-Stör-Verhältnis nach Formel (15). Der zum größten reell positiven Eigenwert $\gamma_{Tmod,max}^{(k)}$ gehörende Eigenvektor $\underline{w}_{D,max}^{(k)}$ ist der Gewichtsfaktor, aufgrund dessen sich das bestmögliche Pseudo-Signal-Stör-Verhältnis gemäß Formel (15) einstellt. Er wird durch das übliche Lösen des Eigenwertproblems (17) ermittelt.

Nachfolgend wird beispielhaft eine Vielzahl von Anwendungs- und Kombinationsmöglichkeiten beschrieben. Letztendlich ist bei den Beispielen das gemeinsame Ziel, einen oder mehrere Kanäle mit einer hohen Qualität zu schaffen, wobei dies letztendlich zum Nachteil der weiteren Kanäle gereicht. Ein Kanal mit hoher Qualität ermöglicht die Verwendung eines kürzeren CDMA-Codes, so dass eine hohe Datenmenge im Vergleich zur Verwendung eines längeren CDMA-Codes übertragen werden kann. Neben der Verwendung kürzerer oder längerer Codes können auch andere Parameter variiert werden, die auf die Übertragungsqualität und die Anforderung hinsichtlich von Interferenzen Einfluss haben. Möglich ist insbesondere Teilnehmern, die einen hochratigen Dienst gegen Bezahlung anfordern, eine besonders gute Datenqualität zu sichern, beispielsweise ein farbiges Bild mit hoher Auflösung zu übertragen, während anderen Teilnehmern, die nur einen normalen Dienst beanspruchen, nur ein grob gerastertes Schwarz/Weiss-Bild zur Verfügung gestellt wird.

Bei der Durchführung des Verfahrens werden somit die variablen Parameter entsprechend den Bedürfnissen gewichtet. Dabei können Daten von verschiedenen Sendequellen zu einer einzigen empfangenden Station übertragen werden, beispielsweise Daten für ein grob gerastertes Schwarz/weiss-Bild von einer ersten senderseitigen Datenquelle und ergänzende Daten für ein hoch auflösendes Farbbild von einer anderen senderseitigen Datenquelle. In einem solchen Fall sind die Wichtungen senderspezifisch vorzunehmen. Möglich ist aber auch eine Übertragung von Daten aus einer einzelnen Datenquelle zu einer Vielzahl von Empfängern, die einen bestimmten Informationsdienst in Anspruch nehmen, so dass in einem solchen Fall eine Wichtung empfängerspezifisch besonders effektiv durchführbar ist. Letztendlich ist auch eine Übertragung von mehreren senderseitigen Quellen zu mehreren Empfängern möglich, was eine entsprechend kompliziertere Verknüpfung senderspezifischer und empfängerspezifischer Wichtungen erforderlich macht.

Bei der Wichtung kann insbesondere nicht nur mit Blick auf einen einzelnen Parameter, beispielsweise ein Bit-bezogenes Signal-Stör-Verhältnis hinsichtlich der Sendeenergie für eine bestimmte empfängerseitige Station, sondern auch eine Vielzahl von variablen Parametern berücksichtigt werden. In die Konstruktionsvorschrift zum Ermitteln von sendespezifischen, insbesondere sendestationsspezifischen und sendeantennenspezifischen, und/oder empfängerspezifischen Sendesignalen können neben den die zu übertragende Information beinhaltenden Daten auch die teilweise oder vollständige Kenntnis der zwischen den Sendeantennen der Sendestationen und den Empfangsantennen der Empfangsstationen wirksamen Funkkanäle eingehen.

Dabei können die sendespezifischen Signale zumindest einer Sendestation unter anderem auf eine Überlagerung mit komplexen Faktoren gewichteter quellenspezifischer Signale zurückgehen. Vorteilhafterweise wird mit Blick auf die Faktoren, insbesondere komplexen Faktoren, eine Wichtung vorgenommen, bei der ein quellenspezifisches Gütekriterium für eine oder mehrere Quellen gemeinsam oder separat ermittelt werden kann. Die Ermittlung der komplexen Faktoren kann dabei in üblicher Art und Weise, insbesondere direkt oder indirekt in iterativer Weise ermittelt werden.

Ein besonders zweckmäßiges Gütekriterium ist die von den Faktoren, insbesondere komplexen Wichtungsfaktoren abhängige zu erwartende Energie an zumindest einer Empfangsantenne von zumindest einer der Empfangsstationen, wobei die zu erwartende Energie mit Blick auf erwünschte und/oder nicht erwünschte Teilsignale der empfängerseitigen Empfangssignale eingeht.

Erwünschte Teilsignale der Empfangssignale sind die zu empfangenden Nutzdaten. Nicht erwünschte Teilsignale der Empfangssignale sind störende, interferierende Signale anderer Kanäle oder externer Sendequellen, wobei von letzteren empfangene Signale allgemein als Rauschen oder Noise N beschreibbar sind.

Ferner kann bei der Bestimmung des Gütekriteriums auch die Eigenschaft der quellenspezifischen Kanalkodierung bzw. diese betreffende Informationen verwendet werden. Als Eigenschaft der quellenspezifischen Kanalkodierung können insbesondere die Parameter Coderate, Rückgrifftiefe, minimale freie Distanz, Verschachtelungsparameter des Kanalkodierers und so weiter eingehen.

Weiterhin kann in das quellenspezifische Gütekriterium eine Information über die verwendeten quellenspezifischen, gruppenweise gemeinsam oder von der Gesamtheit aller Quellen verwendeten Modulationsverfahren eingehen. Diesbezüglich relevante Parameter sind insbesondere Modulationsart, Mächtigkeit des Modulationsalphabets und Art des Symbolabbildens.

Weiterhin kann in das Gütekriterium auch eine Information über die verwendeten Signatur-/Basissignale eingehen, die insbesondere auf CDMA-Codes zurückgehen, wobei ein einfach einsetzbarer Parameter die Länge Q des Signatur-/Basissignals ist. Hinsichtlich der verwendeten CDMA-Codes können auch deren spektrale Spreizfaktoren berücksichtigt werden. Mit Blick auf die Signatur-/Basissignale kann auch berücksichtigt werden, dass diese auf OFDM-Trägersignale zurückgehen, wobei als Parameter der Trägerabstand und die Anzahl der Subträger besonders einfach in das vorstehend beschriebene Verfahren eingebracht werden können. Hier sind somit insbesondere die Länge von Codes bzw. Subträgern einbeziehbar. Berücksichtigbar ist auch, dass die Signatur-/Basissignale Repräsentanten einer höherstufigen, nicht linearen Modulationsart sind.

Mit Blick auf die zuvor beschriebene Verfahrensweise bildet das Gütekriterium, insbesondere quellenspezifische Gütekriterium eine Funktion von zumindest einem Quotienten aus der Energie von Signalen, die an zumindest einer der Empfangsantennen einer Empfangsstation in gewünschter Form empfangen werden, und einer Funktion der Energie von Signalen, die an zumindest einer der Empfangsantennen der gleichen oder anderer Empfangsstationen in unerwünschter Form empfangen werden. Hinsichtlich der unerwünscht empfangenen Signale können insbesondere solche Energien eingehen, die aus Anteilen von Sendesignalen zumindest einer Sendeantennen zumindest einer der Sendestation resultieren, wobei die Anteile der Sendesignale auf quellenspezifischen Daten beruhen. Bei der Umsetzung des Verfahrens können insbesondere derartige unerwünscht empfangene Signale als Linearkombination an zumindest einer der Empfangsantennen der Empfangsstationen empfangenen unerwünschten Signale beschrieben werden.

Auch hinsichtlich der Linearkombination von Energien empfangener unerwünschter Signale können als Vorfaktoren oder Gütefaktoren diverse Parameter eingehen, wie sie bereits vorstehend beschreiben sind, insbesondere Eigenschaften der quellenspezifischen Kanalkodierung, Coderate, Rückgrifftiefe, minimalen freien Distanz, Verschachtelungsparameter des Kanalkodierers, Modulationsverfahren oder Signatur-Basissignalspezifische Parameter.

Neben der Berücksichtigung von systemeigenen Faktoren und Parametern, insbesondere Empfangsstations-, Empfangsantennen-, Sendestations- und Sendeantennen-spezifischen Signalen der Sende- und Empfangsstationen des vorliegenden Funk-Kommunikationssystems können insbesondere auch Signale, in der Regel unerwünschte Signale, berücksichtigt werden, die von systemfremden Signalquellen stammen. Dabei kann es sich um Signale anderer Funk-Kommunikationssysteme aber auch um gänzlich fremdartige Signale von regelmäßigen Signalen bis hin zu weißem Rauschen/Noise handeln.

Vorteilhafterweise kann in Fällen, bei denen eine zu starke Störung eines Kanals festgestellt wird, die auch mit einer entsprechenden Energieerhöhung mit vorstehend beschrieben Verfahren nicht ausreichend korrigierbar ist, die Energieerhöhung für diesen speziellen Kanal bzw. die Verfahrensweise als solche abgeschaltet werden. Das Abschalten kann dabei zeitlich begrenzt und insbesondere auch abhängig von verschiedenen Parametern erfolgen, um eine dynamische Anpassung an die Erfordernisse einer bestimmten Übertragung und an die Art der Störeinflüsse zu ermöglichen. So kann bei zu massiver Fremdstörung beispielsweise eine Verwendung kurzer Codes zum Bereitstellen einer hohen Datenrate nicht sinnvoll sein, da lediglich mit der Verwendung langer Codes eine Übertragung von Daten und Informationen möglich wäre.

Sofern die fremden bzw. systemfremden Störsignale bestimmbar sind, können diese durch Bildung entsprechende Kovarianzmatrizen jedoch auch gezielt bei der Erzeugung eines Sendesignals berücksichtigt werden. Insbesondere kann dabei die Energie bzw. Leistung solcher fremder Störsignale berücksichtigt werden.

Bei dem vorliegend beschrieben Verfahren ist es insbesondere auch vorteilhaft, ermittelte Parameter zeitlich zu speichern, um langsam veränderliche Parameter zu ermitteln, so dass zum Beispiel langsam veränderliche Kanalcharakteristika ermittelt und bei der Berechnung eines Sendesignals berücksichtigt werden können. Dabei können insbesondere auch wirksame Pfadgewinne berücksichtigt werden.

Bei einer besonders bevorzugen Ausführungsform gehen in die Linearkombination der Energien die aus Sicht einer Empfangsstation an allen Empfangsantennen aller anderen Empfangsstationen eines Systems empfangenen unerwünschten Signale eingehenden Vorfaktoren durch die Summe über die Produkte des Logarithmus Dualis der Mächtigkeit des Modulationsalphabetes und der Coderate dividiert durch den spektralen Spreizfaktor aller am betrachteten Empfangsort interessierenden quellenspezifischen Daten ein.

**Patentansprüche**

1. Verfahren zum Ermitteln sendeortspezifischer Sendesignale in einem Funk-Kommunikationssystem (GSM, UMTS) mit zumindest einer Sendestation (BS1, BS2) mit zumindest einer Sendeantenne (ka1-ka3) und mit zumindest einer Empfangsstation (Ms1, MS2) mit zumindest einer Empfangsantenne und einer Funkschnittstelle (V; V1, V2) zwischen diesen zum Übertragen eines Sendesignals,

   - wobei beim Ermitteln und Erzeugen der sendeortspezifischen Sendesignale eine Vielzahl von einzelnen sendeortspezifischen Teil-Sendesignalen für jeweils verschiedene Funkverbindungen (V1 bzw. V2) zwischen jeweils einer Sendeantenne und einer Empfangsantenne in einem gemeinsamen Verfahren berücksichtigt wird,
   - wobei die Teil-Sendesignale für verschiedene bestimmte der Funkverbindungen (V1 bzw. V2) beim Erzeugen des Sendesignals einer verschiedenen spezifischen Wichtung ($\underline{w}_k$) unterzogen werden,
   - wobei die Teil-Sendesignale verschiedenen senderseitigen Datenquellen, verschiedenen zugeordneten Datendiensten und/oder verschiedenen Empfangseinrichtungen zugeordnet werden,
   - wobei beim Ermitteln und Erzeugen des Sendesignals die teilweise oder vollständige Kenntnis wirksamer Funkkanäle zwischen den Sendeorten und den Empfangsorten verwendet wird und
   - wobei die sendeortspezifischen Sendesignale auf eine Überlagerung mit quellen- und/oder sendeort-spezifischen Faktoren ($\underline{w}_{k,ka}$) gewichteter quellen- und/oder sendeort-spezifischer Signale zurückgehen,

   **dadurch gekennzeichnet,**
   **dass** die Faktoren ($\underline{w}_{k,ka}$) unter Verwenden eines quellen- und/oder sendeort-spezifischen Gütekriteriums ermittelt werden.

2. Verfahren nach Anspruch 1, bei dem
   in das quellenspezifische Gütekriterium die von den insbesondere komplexwertigen Faktoren ($\underline{w}_{k,ka}$) abhängige zu erwartende Energie der an den Empfangsorten erwünschten und/oder nicht erwünschter Teilsignale der empfangsortspezifischen Empfangssignale eingeht.

3. Verfahren nach Anspruch 1 oder 2, bei dem
   das quellenspezifische Gütekriterium eine Funktion von einem oder mehreren Quotienten aus der Energie der an einem Empfangsort empfangenen gewünschten Signale und einer Funktion der Energie der am gleichen Empfangsort empfangenen unerwünschten Signale ist.

4. Verfahren nach einem vorstehenden Anspruch, bei dem
   in das quellenspezifische Gütekriterium Informationen über empfangsortspezifisch empfangene Signale eingehen, die von nicht zu der für die Sendesignalerzeugung gehörenden Anordnung von Sende- und Empfangsantennen des Kommunikationssystems gehörenden Signalquellen herrühren.

5. Verfahren nach einem vorstehenden Anspruch, bei dem
   das quellenspezifische Gütekriterium der Quotient aus der Energie der an einem Empfangsort empfangenen gewünschten Signale und einer Linearkombination, also eine mit Faktoren ($b_k$) gewichteten Summe, der durch das Übertragen des entsprechenden quellenspezifischen Sendesignals an anderen Empfangsorten verursachten Interferenzenergien ist.

6. Verfahren nach Anspruch 5, bei dem
   in der Linearkombination die Gewichte der bei den einzelnen Empfangsorten erwarteten Interferenzenergien eine Funktion der Störanfälligkeit oder der Mindest-Signal-Störverhältnisanforderung des jeweiligen Empfängers sind.

7. Verfahren nach Anspruch 5 oder 6, bei dem
   die in die Linearkombination von Energien der an den anderen Empfangsorten empfangenen unerwünschten Signale eingehenden Vorfaktoren durch die Summe über die Produkte des Logarithmus Dualis der Mächtigkeit des Modulationsalphabets und der Coderate dividiert durch den spektralen Spreizfaktor aller von dieser Empfangsstation zu detektierenden quellenspezifischen Daten gegeben sind.

8. Kommunikations-Vorrichtung zum Erzeugen sendeortspezifischer Sendesignale unter Verwendung eines Verfahrens nach einem vorstehenden Anspruch.

— : hohe Rate V1, V2
- - - : niedrige Rate
......... : Störsignal N

# Fig. 1

# Fig. 2

**Europäisches Patentamt**

## EUROPÄISCHER RECHERCHENBERICHT

Nummer der Anmeldung

EP 01 12 2149

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 198 03 188 A (SIEMENS AG) 29. Juli 1999 (1999-07-29) * Seite 2, Zeile 47 - Seite 3, Zeile 19 * | 1-4 | H04Q7/38 |
| A | | 5-8 | |
| X | DE 100 05 324 A (SIEMENS AG) 9. August 2001 (2001-08-09) * Seite 2, Zeile 31 - Seite 2, Zeile 62 * * Seite 3, Zeile 9 - Seite 3, Zeile 39 * * Seite 4, Zeile 47 - Seite 4, Zeile 53 * * Anspruch 1 * | 1 | |
| A | EP 0 999 658 A (LUCENT TECHNOLOGIES INC) 10. Mai 2000 (2000-05-10) * Zusammenfassung * | 1 | |
| A | WO 99 40648 A (ARRAYCOMM INC) 12. August 1999 (1999-08-12) * Zusammenfassung * * Seite 29, Zeile 14 - Seite 29, Zeile 20 * | 1-4 | |

**RECHERCHIERTE SACHGEBIETE (Int.Cl.7)**

H04Q
H04B

Der vorliegende Recherchenbericht wurde für alle Patentansprüche erstellt

| Recherchenort | Abschlußdatum der Recherche | Prüfer |
|---|---|---|
| MÜNCHEN | 17. Mai 2002 | Harrysson, A |

**ANHANG ZUM EUROPÄISCHEN RECHERCHENBERICHT
ÜBER DIE EUROPÄISCHE PATENTANMELDUNG NR.**

EP 01 12 2149

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2002

| Im Recherchenbericht angeführtes Patentdokument | Datum der Veröffentlichung | Mitglied(er) der Patentfamilie | Datum der Veröffentlichung |
|---|---|---|---|
| DE 19803188 A | 29-07-1999 | DE 19803188 A1<br>CN 1233923 A<br>US 6317586 B1 | 29-07-1999<br>03-11-1999<br>13-11-2001 |
| DE 10005324 A | 09-08-2001 | DE 10005324 A1<br>AU 3914301 A<br>WO 0159952 A2 | 09-08-2001<br>20-08-2001<br>16-08-2001 |
| EP 0999658 A | 10-05-2000 | AU 5715999 A<br>BR 9904973 A<br>CN 1253425 A<br>EP 0999658 A2<br>JP 2000151484 A | 08-06-2000<br>17-10-2000<br>17-05-2000<br>10-05-2000<br>30-05-2000 |
| WO 9940648 A | 12-08-1999 | US 6185440 B1<br>AU 2571999 A<br>CN 1289466 T<br>EP 1055267 A1<br>JP 2002503048 T<br>WO 9940648 A1 | 06-02-2001<br>23-08-1999<br>28-03-2001<br>29-11-2000<br>29-01-2002<br>12-08-1999 |

EPO FORM P0461

Für nähere Einzelheiten zu diesem Anhang : siehe Amtsblatt des Europäischen Patentamts, Nr.12/82